Europäisches Patentamt

European Patent Office

Office européen des brevets

(11) Numéro de publication: **0 085 453**

**B1**

## (12) FASCICULE DE BREVET EUROPEEN

(45) Date de publication du fascicule du brevet: **20.11.86**

(51) Int. Cl.⁴: **H 04 K 1/00,** H 04 N 7/16

(21) Numéro de dépôt: **83200083.0**

(22) Date de dépôt: **19.01.83**

(54) **Système électronique de transmission secrète de signaux audio.**

(30) Priorité: **29:01.82 FR 8201462**

(43) Date de publication de la demande:
**10.08.83 Bulletin 83/32**

(45) Mention de la délivrance du brevet:
**20.11.86 Bulletin 86/47**

(84) Etats contractants désignés:
**BE DE FR GB IT**

(56) Documents cités:
**CH-A- 460 870**
**DE-A-2 334 428**
**GB-A-2 042 849**

**TOUTE L'ELECTRONIQUE, no. 460, janvier
1981, pages 29-30, Paris (FR); J.J. POUBEAUD:
"Cryptage du son pour la télévision à péage"
TOUTE L'ELECTRONIQUE.**

(73) Titulaire: **LA RADIOTECHNIQUE, Société
Anonyme dite:**
**51, rue Carnot BP 301**
**F-92156 Suresnes Cedex (FR)**

(72) Inventeur: **Taurin, Michel**
**Société Civile S.P.I.D. 209 rue de l'Université**
**F-75007 Paris (FR)**
Inventeur: **Pernot, Jean-Michel**
**Société Civile S.P.I.D. 209 rue de l'Université**
**F-75007 Paris (FR)**
Inventeur: **Marie, Gérard**
**Société Civile S.P.I.D. 209 rue de l'Université**
**F-75007 Paris (FR)**

(74) Mandataire: **Landousy, Christian et al**
**Société Civile S.P.I.D. 209, Rue de l'Université**
**F-75007 Paris (FR)**

Courier Press, Leamington Spa, England.

# Description

La présente invention concerne un nouveau système électronique permettant une transmission secrète de signaux audio.

L'article "Cryptage du son pour la télévision à péage", paru dans la revue "Toute l'Electronique" n° 460, janvier 1981, pages 29 et 30, décrit un système de transmission composé, dans son dispositif de codage, d'un modulateur d'amplitude qui inverse ou non l'amplitude du signal en fonction d'une séquence binaire délivrée par un générateur de séquences pseudoaléatoires, et, dans son dispositif de décodage, d'un démodulateur similaire utilisant le même principe. Ce système offre une solution simple, par exemple dans le domaine de la télévision dite à péage, pour assurer le brouillage du son présent comme signal d'entrée.

Le but de l'invention est de proposer un système de transmission dont la résistance au décodage frauduleux ou non autorisé soit encore renforcée par rapport aux systèmes tels que celui décrit dand le document cité.

L'invention concerne à cet effet un système électronique de transmission secrète de signaux audio composé d'un dispositif de codage comprenant au moins un modulateur d'amplitude, d'au moins un canal de transmission, et d'un dispositif de décodage comprenant un démodulateur d'amplitude, caractérisé en ce que:

(A) le dispositif de codage comprend:

(a) en sortie d'un filtre passe-bas d'entrée, deux modulateurs en parallèle destinés à opérer la modulation desdits signaux audio à l'aide de signaux de fréquences $F_1$ et $F_2$ respectivement;

(b) un étage de génération des deux signaux de modulation de fréquences $F_1$ et $F_2$ à partir d'un signal de référence de fréquence pilote $F_p$;

(c) un premier inverseur destiné à envoyer vers le canal de transmission alternativement la sortie de l'un ou l'autre desdits modulateurs selon l'état d'un signal délivré par un premier étage de génération de séquences pseudoaléatoires;

(B) le dispositif de décodage comprend:

(d) un étage de reconstruction des signaux de fréquences $F_1$ et $F_2$ à partir du signal de fréquence $F_p$ transmis par le canal de transmission;

(e) un deuxième inverseur qui sélectionne l'un ou l'autre desdits signaux de fréquences $F_1$ et $F_2$ selon l'état d'un signal délivré par un deuxième étage de génération de séquences pseudoaléatoires synchrone du premier, lesdits étages étant commandés par une clé de codage transmise par l'intermédiaire du signal de fréquence $F_p$ destiné à assurer le synchronisme de ces étages;

(f) le démodulateur d'amplitude, commandé par les signaux de fréquences $F_1$ et $F_2$ et destiné à envoyer vers un filtre passe-bas de sortie les signaux audio décodés.

Avec un tel système de transmission, on procède donc à un retournement du spectre de base des signaux d'origine à coder autour d'une fréquence de modulation, mais celle-ci est choisie de façon aléatoire parmi deux fréquences possibles, le passage de l'une à l'autre étant commandé par une séquence pseudoaléatoire qu'un code spécial permet de générer. Pour empêcher la démodulation des signaux codés par une seule de ces deux fréquences $F_1$ et $F_2$ ou par une fréquence intermédiaire située entre $F_1$ et $F_2$, leurs valeurs doivent être distantes d'environ 1 kilohertz ou plus. Dans ces conditions, le brouillage des siganux sonores est cette fois tout à fait résistant, et le message codé est réellement inintelligible et ne peut pas être reconstitué.

D'autre particularités et avantages de l'invention apparaîront de façon plus précise dans la description qui suit et dans les dessins annexés donnés à titre d'exemples non limitatifs et dans lesquels:

— la figure 1 montre dans le système de transmission selon l'invention un exemple de réalisation du dispositif de codage;

— la figure 2 montre un exemple du spectre du signal de sortie du filtre passe-bas d'entrée de ce dispositif de codage;

— les figures 3a et 3b montrent le spectre des signaux de sortie des deux modulateurs;

— la figure 4 montre le spectre du signal de sortie du dispositif de codage, qui est envoyé vers l'entrée du canal de transmission;

— les figures 5a à 5d montrent les signaux de sortie des différents circuits de l'étage de génération d'un signal de synchronisation;

— la figure 6 montre un exemple de réalisation du dispositif de décodage dans le système de transmission conforme à l'invention;

— les figures 7a à 7c montrent dans le dispositif de décodage les signaux de sortie en différents points de l'étage de récupération du signal de synchronisation;

— les figures 8a et 8b montrent le spectre des deux signaux d'entrée possibles du démodulateur, et les figures 9a et 9b les deux signaux de sortie correspondants du démodulateur.

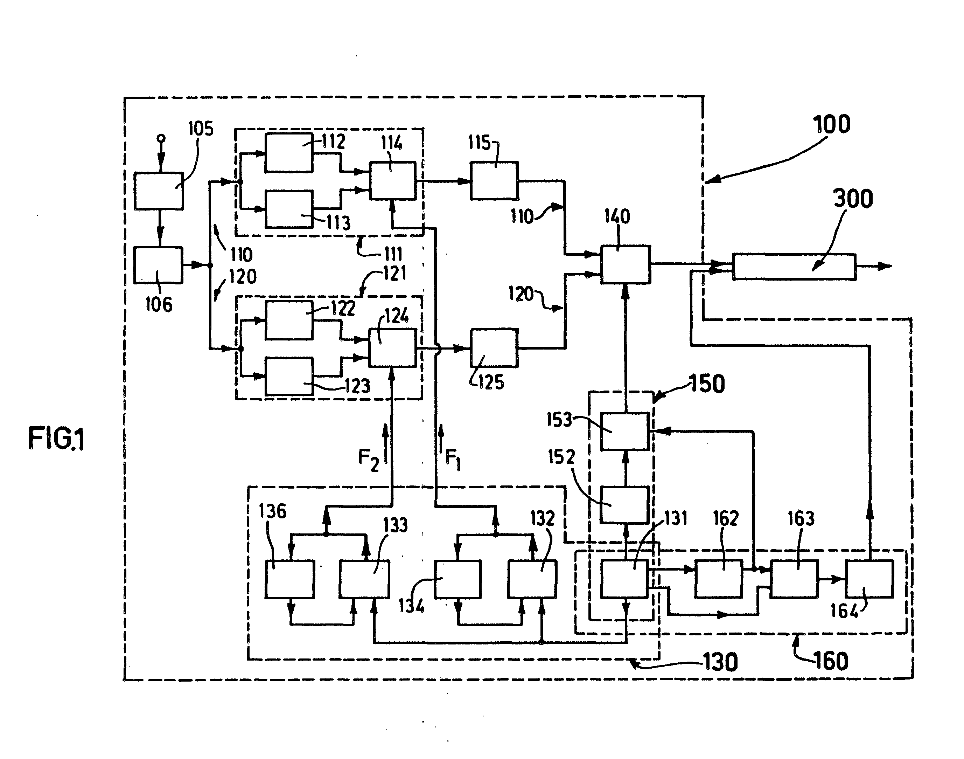

Le système électronique de transmission secrète de signaux audio décrit ci-dessous en référence aux figures comprend un dispositif de codage 100, représenté sur la figure 1, au moins un canal de transmission 300, et un dispositif de décodage 500, représenté sur la figure 6.

Le dispositif de codage 100 comprend lui-même successivement un filtre passe-bas d'entrée 105 qui reçoit les signaux aud˙ɔ à transmettre de façon secrète, deux voies 110 et 120 en parallèle l'une sur l'autre et composées chacune d'un modulateur 111 ou 121 et d'un filtre passe-bas 115 ou 125, et un inverseur 140 destiné à sélectionner sur commande le signal de sortie de l'une ou l'autre de ces deux voies pour délivrer en sortie les signaux audio codés à transmettre. Chaque modulateur comprend deux amplificateurs en parallèle (112, 113) ou (122, 123), de gain égal à +1 pour les amplificateurs 112 et 122 et à

−1 pour les amplificateurs 113 et 123, et un commutateur 114 ou 124 reliant au filtre passe-bas 115 ou 125, pour chaque modulateur, alternativement la sortie de l'amplificateur de gain +1 ou celle de l'amplificateur de gain −1, selon celui des deux états possibles qu'occupe un signal numérique de fréquence $F_1$ pour le premier modulateur 111 et de fréquence $F_2$ pour le deuxième modulateur 121.

Le filtre passe-bas d'entrée 105 est destiné à éviter les repliements de spectre et, à cet effet, atténue très fortement toutes les fréquences supérieures à la plus basse des deux fréquences de modulation $F_1$ et $F_2$ (voir la figure 2). La fréquence de coupure de ce filtre doit être inférieure à la plus faible de ces deux fréquences $F_1$ et $F_2$ et sa pente doit être d'autant plus forte que l'on souhaite transmettre davantage de bande passante; on pourra par exemple utiliser un filtre de Cauer d'ordre 7, cet ordre étant choisi pour que la fréquence de coupure de l'ensemble dispositif de codage-dispositif de décodage soit la plus élevée possible. Les signaux audio d'entrée, ainsi filtrés, peuvent alors subir une préaccentuation dans un circuit 106, de l'ordre de 75 microsecondes par example, qui présente le triple avantage suivant: éviter la surcharge du canal de transmission 300 en hautes fréquences du fait du retournement du spectre de base pour la première bande latérale inférieure du spectre de fréquence modulé, atténuation des bruits de commutation qui peuvent être créés lorsque le dispositif de décodage 500 n'est pas rigoureusement en phase avec le dispositif de codage 100, amélioration du rapport signal sur bruit de l'ensemble dispositif de codage-dispositif de décodage.

Le signal de sortie du filtre passe-bas d'entrée 105 -ou de circuit de préaccentuation 106 s'il est prévu entre ce filtre et l'entrée des deux voies 110 et 120 en parallèle- est alors envoyé vers les deux modulateurs 111 et 121 du type à inversion de phase; comme le montre la figure 1, en ce qui concerne par exemple le modulateur 111, le commutateur analogique 114 commandé par l'une des fréquences de modulation $F_1$ (l'autre commandant le commutateur 124) permet de sélectionner l'une ou l'autre des sorties des amplificateurs 112 et 113 (de gain +1 et −1 respectivement selon celui des deux états possibles dits haut ou bas qu'occupe le signal numérique de fréquence $F_1$ (de fréquence $F_2$ pour le modulateur 121).

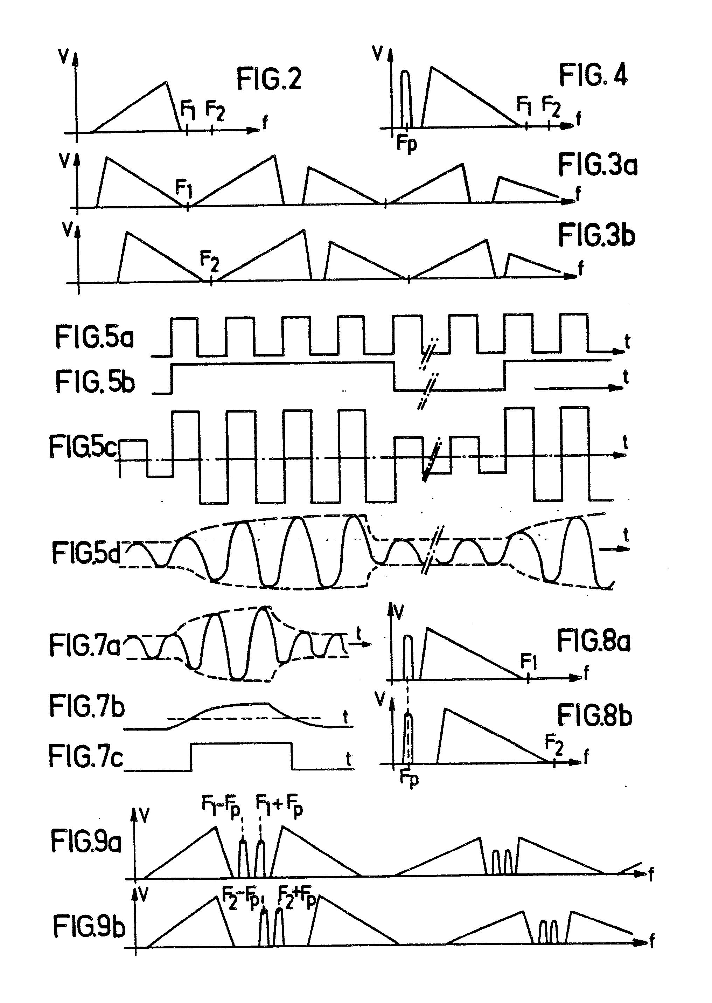

Compte tenu du retournement du spectre de base et de la présence d'autres bandes latérales inférieures et supérieures (voir les figures 3a et 3b, où les spectres sont représentés de façon dissymétrique pour bien mettre en évidence qu'il y a retournement du spectre de base) autour des fréquences successives $3F_1$, $5F_1$, etc. dans le spectre du signal de sortie du modulateur 111, ou des fréquences successives $3F_2$, $5F_2$, etc. dans le spectre du signal de sortie du modulateur 121, les filtres passe-bas 115 et 125 sont nécessaires, en sortie des modulateurs, pour éliminer dans chacun des deux cas les bandes autres que la première bande latérale inférieure du spectre modulé; on peut ici utiliser, à cet effet, deux filtres dont la pente à la fréquence de coupure est suffisamment grande pour que l'on obtienne une modulation à bande latérale unique pour la quai-totalité de spectre audio, par exemple des filtres de Cauer d'ordre 7.

Dans chaque voie, le brouillage des signaux audio d'entrée est donc obtenu en modulant ces signaux au rythme d'une fréquence $F_1$ ou $F_2$ puis en filtrant le produit de modulation de façon à ne laisser subsister que la bande latérale inférieure du spectre, puis enfin en sélectionnant de façon aléatoire, à l'aide de l'inverseur 140 et au rythme des changements d'état d'un signal binaire aléatoire envoyé vers cet inverseur par un étage 150 de génération de séquences pseudoaléatoires, le signal de sortie de l'une ou l'autre des voies 110 et 120. La sortie de l'inverseur 140 constitue les signaux audio codés à transmettre, par l'intermédiaire du canal de transmission 300, vers le dispositif de décodage 500 qui sera décrit plus loin.

Les deux signaux numériques de fréquences $F_1$ et $F_2$ sont envoyés vers les modulateurs, 111 et 121 respectivement, par un égage 130 de génération des signaux de modulation comprenant un oscillateur 131 suivi de deux boucles à verrouillage de phase 132 et 133 en parallèle; ces dernières sont utilisées en multiplicateurs de fréquence à partir de la fréquence pilote de l'oscillateur 131 et délivrent l'une le signal à la fréquence $F_1$ envoyé vers le modulateur 111 et l'autre le signal à la fréquence $F_2$ envoyé vers le modulateur 121. Dans un exemple de réalisation effective de l'invention, les valeurs de fréquence suivantes ont été adoptées: fréquence pilote $F_p$=800 hert, fréquence de modulation $F_1$=$F_p \times 14$=11200 hertz, fréquence de modulation $F_2$=$F_p \times 16$=12800 hertz, la boucle 132 qui synthétise le signal à la fréquence $F_1$ étant associée à un diviseur 134 par 14 et la boucle 133 qui synthétise le signal à la fréquence $F_2$ à un diviseur 136 par 16.

L'étage 150 de génération de séquences pseudoaléatoires comprend également un oscillateur, ici l'oscillateur 131, suivi d'un diviseur 152 puis d'un générateur 153 de séquences numériques pseudoaléatoires commandé par une clé de codage après réception de signaux de validation générés comme indiqué ci-dessous, le signal de sortie de ce générateur 153 commandant donc au rythme de ses changements d'état le basculement de l'inverseur 140.

Enfin, pur qu'il soit ultérieurement d'assurer le synchronisme des séquences numériques pseudoaléatoires du dispositif de décodage et du dispositif de codage, il est prévu un étage 160 de génération d'un signal de synchronisation. Ce signal est obtenu en modulant en amplitude le signal de sortie d'un oscillateur toutes les n secondes, à l'aide des signaux de validation. L'étage 160 comprend à cet effet l'oscillateur 131, un circuit 162 de synthèse des signaux de validation à partir du signal de sortie de cet oscillateur à la fréquence pilote, un modulateur 163 de l'amplitude du signal de sortie de l'oscillateur 131, ainsi qu'un circuit 164 de mise en forme dont la sortie constitue ledit signal de synchronisation. Ce signal de synchronisation est alors regroupé avec les signaux audio codés de sortie de l'inverseur 140 pour constituer un signal composite envoyé vers le canal de transmission 300. La figure 4 montre le spectre du signal de sortie du dispositif de codage, avec d'une part la bande de fréquences correspondant aux signaux audio codés et d'autre part, au-dessous de celle-ci, la bande de fréquences correspondant à la fréquence pilote modulée, tandis que les figures 5a à 5d montrent respectivement les signaux de sortie de l'oscillateur 131, du circuit 162 de synthèse des signaux de validation, du modulateur 163 et du circuit 164 de mise en forme.

Réciproquement, dans le dispositif de décodage 500 de la figure 6, en sortie du canal 300, on va extraire du signal composite les signaux audio codés et le signal de synchronisation. Le dispositif de décodage comprend à cet effet, pour le traitement des signaux audio codés, tout d'abord un filtre passe-bas d'entrée 515. Les signaux audio codés, ainsi filtrés atteignent un démodulateur 530 qui comprend deux amplificateurs en parallèle 531 et 532, de gain égal à +1 et a−1 respectivement, et un commutateur 534 reliant à un filtre passe-bas 536 (éventuellement précédé d'un circuit de désaccentuation 535) alternativement la sortie de l'amplificateur 531 ou celle de l'amplificateur 532, la sortie du filtre 536 constituant les signaux audio décodés qui correspondent aux signaux audio d'entrée dont on voulait effectuer la transmission de façon secrète.

Le dispositif de décodage 500 comprend d'autre part un circuit 501 d'extraction du signal de synchronisation dont le signal de sortie, représenté sur la figure 7a, est envoyé par l'intermédiaire d'un circuit 502 de mise en forme vers deux boucles à verrouillage de phase 503 et 504 en parallèle associées (comme précédemment) respectivement à un diviseur 505 et à un diviseur 506. Les circuits 501 à 506 constituent un étage 510 de reconstruction des signaux de fréquence $F_1$ et de fréquence $F_2$, qui sont donc disponibles en sortie des boucles 503 et 504 et sont envoyés vers les deux entrées d'un inverseur 520; celui-ci sélectionne alors le signal de fréquence $F_1$ ou celui de fréquence $F_2$ selon celui des deux états possibles qu'coupe un signal binaire alèatoire envoyé vers cet inverseur par un étage 550 de génération de séquences pseudoaléatoires.

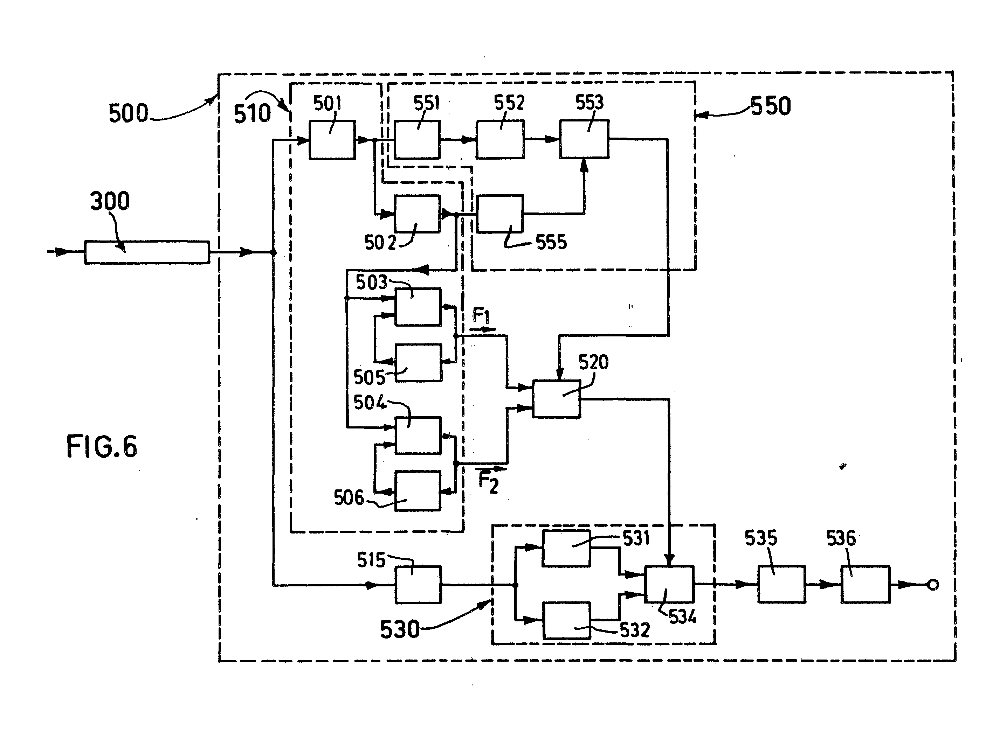

La sortie de l'inverseur 520 est envoyée vers le démodulateur 530 et en commande le commutateur 534, le principe de démodulation consistant donc en effet à réaliser la multiplication des signaux audio codés filtrés par l'une ou l'autre des fréquences de modulation $F_1$ et $F_2$, selon celle qui a été sélectionnée par l'inverseur 520, puis à filtrer la sortie du démodulateur 530 (dans le filtre 536) pour ne conserver que le spectre des signaux audio décodés tout en éliminant les signaux parasites aux fréquences $F_1 \pm F_p$ et $F_2 \pm F_p$. Les figures 8a et 8b montrent le spectre des deux signaux d'entrée possibles du démodulateur 530, selon que la sortie de l'inverseur 520 est le signal de fréquence $F_1$ (cas de la figure 8a) ou le signal de fréquence $F_2$ (cas de la figure 8b), et les figures 9a et 9b montrent les spectres correspondants en sortie du démodulateur, avant action du filtre passe-bas de sortie 536.

Le dispositif de décodage 500 comprend enfin, pour le traitement du signal de synchronisation, l'étage 550 de génération de séquences pseudo-aléatoires, composé lui-même d'un circuit 551 de détection d'enveloppe, d'un circuit 552 de mise en forme des signaux de validation (les figures 7b et 7c montrent les signaux de sortie de ces circuits 551 et 552) et d'un générateur 553 de séquences numériques pseudoaléatoires initialisé par ces signaux de validation et dont le signal d'horloge est obtenu par division de la fréquence pilote présente en sortie du circuit 502 dans un diviseur 555. Le signal de sortie du générateur 553 constitue le signal binaire aléatoire qui commande le basculement alternatif de l'inverseur 520 et donc la sélection du signal de fréquence $F_1$ ou celle du signal de fréquence $F_2$ pour envoi vers le commutateur 534 de démodulateur 530.

Bien entendu, la présente invention n'est pas limitée à l'exemple de réalisation qui vient d'être décrit et représenté, à partir duquel des variantes peuvent être proposées sans pour cela sortir du cadre de l'invention.

On peut par exemple inverser la position relative des fréquences audio codées et de la fréquence pilote $F_p$ modulée (position qui est visible sur les figures 4, 8a et 8b) utilisant pour $F_p$ une fréquence supérieure à $F_1$ et $F_2$. Dans ce cas, les fréquences $F_1$ et $F_2$ peuvent être synthétisées en divisant d'abord $F_p$ par un nonbre entier k, puis en multipliant $F_p/k$ par des nombres entiers 1 et m pour obtenir $F_1$ et $F_2$ respectivement.

Par ailleurs, dans le cas où le système selon l'invention est appliqué au domaine de la télévision dite cryptée et est donc utilisable en association avec un récepteur de télévision (le dispositif de décodage étant soit incorporé au récepteur, soit simplement raccordé à celui-ci en tant que module extérieur), les boucles à verrouillage de phase des étages 130 et 510 de génération des deux signaux de modulation de fréquence $F_1$ et $F_2$ peuvent être commandées non plus par une fréquence pilote autonome, mais par le fréquence trame $F_T$. Le générateur 553 de séquences numériques pseudoléatoires est alors synchronisé à l'aide du signal de validation transmis dans la voie vidéo et déjà utilisé pour le cryptage de cette voie.

Il est possible, également, que le temps de propagation des signaux codés ne soit pas égal au temps de propagation de la fréquence pilote $F_p$

ou, dans le cas de la télévision, de la fréquence trame $F_T$. Il apparait alors, dans les signaux décodés, au moment des commutations de la fréquence $F_1$ à la fréquence $F_2$ et inversement, des sauts de phase qui se traduisent par des bruits de commutation. L'utilisation d'une préaccentuation avant modulation et d'une désaccentuation après démodulation diminue fortement l'intensité de ces bruits. L'utilisation d'une fréquence de commutation de l'ordre du hertz ou inférieure à cette valeur diminue aussi leur perceptibilité. Pour supprimer complètement ces bruits, on peut également introduire dans le décodeur un dispositif de réglage du temps de propagation de la fréquence pilote $F_p$ ou de la fréquence trame $F_T$, de façon à le faire coïncider avec le temps de propagation des signaux codés.

En outre, le système décrit jusqu'à présent utilise un seul canal de transmission entre les dispositifs de codage et de décodage, mais il ne s'agit là nullement d'une limitation de l'invention. Le code ayant servi au brouillage des siganux à l'émission peut par exemple être reçu par un canal de transmission différent de celui emprunté par les siganux audio codés.

## Revendications

1. Système électronique de transmission secrète de signaux audio composé d'un dispositif de codage comprenant au moins un modulateur d'amplitude, d'au moins un canal de transmission, et d'un dispositif de décodage comprenant un démodulateur d'amplitude, caractérisé en ce que:

(A) le dispositif de codage comprend:

   (a) en sortie d'un filtre passe-bas d'entrée (105), deux modulateurs en parallèle (111) et (121) destinés à opérer la modulation desdits signaux audio à l'aide de signaux de fréquences $F_1$ et $F_2$ respectivement;

   (b) un étage de génération des deux signaux de modulation de fréquences $F_1$ et $F_2$ à partir d'un signal de référence de fréquence pilote $F_p$;

   (c) un premier inverseur (140) destiné à envoyer vers le canal de transmission alternativement la sortie de l'un ou l'autre desdits modulateurs selon l'état d'un signal délivré par un premier étage (150) de génération de séquences pseudoaléatoires;

(B) le dispositif de décodage comprend:

   (d) un étage de reconstruction des signaux de fréquences $F_1$ et $F_2$ à partir du signal de fréquence $F_p$ transmis par le canal de transmission:

   (e) un deuxième inverseur (520) qui sélectionne l'un ou l'autre desdits signaux de fréquences $F_1$ et $F_2$ selon l'état d'un signal délivré par un deuxième étage (550) de génération de séquences pseudoaléatoires synchrone du premier, lesdits étages étant commandés par une clé de codage transmise par l'intermédiaire du signal de fréquence $F_p$ destiné à assurer le synchronisme de ces étages;

   (f) le démodulateur d'amplitude (530), commadé par les signaux de fréquences $F_1$ et $F_2$ et destiné à envoyer vers un filtre passe-bas de sortie (536) les signaux audio décodés.

2. Système selon la revendication 1, caractérisé en ce qu'un circuit de préaccentuation (106) est prévu dans le dispositif de codage entre la sortie du filtre passe-bas d'entrée (105) et l'entrée des modulateurs et en ce qu'un circuit de désaccentuation (535) est préuv dans le dispositif de décodage entre la sortie de démodulateur (530) et l'entrée du filtre passe-bas de sortie (536).

3. Système selon l'une des revendications 1 et 2, caractérisé en ce que les étages de génération des deux signaux de modulation de fréquences $F_1$ et $F_2$ comprennent un oscillateur (131) suivi de deux boucles à verrouillage de phase (132) et (133) qui délivrent respectivement le signal de fréquence $F_1$ et celui de fréquence $F_2$, et en ce que les étages de génération de séquences pseudoaléatoires (150) et (550) comprennent un générateur de séquences numériques pseudoaléatoires (153) ou (553) commandé par la clé de codage après validation de celle-ci.

4. Système selon la revendication 3, caractérisé en ce que le signal de fréquence pilote $F_p$ transmis en même temps que les signaux audio codés pour permettre la génération de signaux de fréquences $F_1$ et $F_2$ choisies égales à des multiples de $F_p$ ou d'un sous-harmonique de $F_p$ est, pour assurer le synchronisme des générateurs de séquences numériques pseudoaléatoires (153) ou (553), modulé à l'aide d'un étage (160) de génération du signal de synchronisation comprenant un oscillateur suivi d'un modulateur d'amplitude et d'un circuit de mise en forme.

5. Système selon la revendication 3, utilisable dans le domaine de la télévision dite cryptée en association avec un récepteur de télévision, caractérisé en ce que les étages de génération des deux signaux de modulation de fréquences $F_1$ et $F_2$ comprennent deux boucles à verrouillage de phase commandées par la fréquence trame $F_T$ pour délivrer respectivement le signal de fréquence $F_1$ et celui de fréquence $F_2$, et en ce que le synchronisme des générateurs de séquences numériques pseudoaléatories utilisés à l'émission et à la réception est assuré par un signal de validation transmis dans la voie vidéo et déjà utilisé pour le cryptage de cette voie.

6. Système selon l'une des revendications 4 et 5, caractérisé en ce qu'un dispositif de réglage du temps de propagation de la fréquence pilote $F_p$ ou de la fréquence trame $F_T$ est prévu dans le dispositif de décodage pour annuler ou réduire les bruits de commutation.

7. Système selon la revendication 5, caractérisé en ce que le dispositif de décodage est incorporé au récepteur de télévision.

8. Récepteur de signaux audio, caractérisé en ce qu'il comprend le dispositif de décodage du système de transmission selon l'une des revendications 1 à 4.

9. Récepteur de télévision, caractérisé en ce qu'il comprend le dispositif de décodage des signaux audio du système de transmission selon l'une des revendications 5 à 7.

**Patentansprüche**

1. Elektronisches System zur geheimen Übertragung von Audiosignalen mit einer Kodieranordnung mit mindestens einem Amplitudemodulator, mindestens einem Übertragungskanal und mit einer Dekodieranordnung, die einen Amplitudendemodulator aufweist, dadurch gekennzeichnet dass

(A) die Kodieranordnung die folgenden Schaltungselemente aufweist:

(a) am Ausgang eines Eingansbandpassfilters (105) zwei parallele Modulatoren (111) und (121) zur Modulation der genannten Audiosignale mit Hilfe von Signalen mit den Frequenzen $F_1$ bzw. $F_2$;

(b) eine Stufe zum Erzeugen der beiden Modulationssignale mit den Frequenzen $F_1$ und $F_2$ aus einem Bezugssignal mit der Pilotfrequenz $F_p$,

(c) einen ersten Umschlater (140) zur abwechselnden Aussendung, des Ausgangssignals des einen oder des anderen der genannten Modulatoren über den Übertragunskanal, in Abhängigkeit von dem Zustand eines Signals, das von einer ersten Stufe (150) zum Erzeugen pseudo-zufälliger Folgen geliefert wird;

(B) die Dekodieranordnung die folgenden Schaltungselemente aufweist:

(d) eine Stufe zum Rekonstruieren von Signalen mit den Frequenzen $F_1$ und $F_2$ ausgehend von einem mit der Frequenz $F_p$ über den Übertragungskanal übertragenen Signals;

(e) einen zweiten Umschalter (520), der eines der genannten Signale mit den Frequenzen $F_1$ und $F_2$ in Abhängigkeit von dem Zustand eines Signals, das von einer zweiten zur ersten Stufe Synchronen Stufe (550) zum Erzeugen von pseudo-zufälligen Folgen geliefert wird, wählt, wobei die genannten Stufen von einem Kodierungsschlüssel gesteuert werden, der mittels des Signals mit der Frequenz $F_p$ zur Synchronisierung dieser Stufen übertragen wird;

(f) den Amplitudendemodulator (530), der mittels der Signale mit den Frequenzen $F_1$ und $F_2$ gesteuert wird und über ein Ausgangstiefpassfilter (536) die dekodierten Audio-Signale liefert.

2. System nach Anspruch 1, dadurch gekennzeichnet, dass in der Kodieranordnung zwischen dem Ausgang des Eingangstiefpassfilters (105) und dem Eingang der Modulatoren ein Vorentzerrungsfilter (106) vorgesehen ist und dass in der Dekodieranordnung zwischen dem Ausgang des Demodulators (530) und dem Eingang des Ausgangstiefpassfilters (536) ein Nachentzerrungsfilter (535) vorgesehen ist.

3. System nach einem der Ansprüche 1 und 2, dadurch gekennzeichnet, dass die Stufen zum Erzeugen der zwei Modulationssignale mit den Frequenzen $F_1$ und $F_2$ einen Oszillator (131) mit zwei nachfolgenden Phasenverriegelungsschleifen (132) und (133) enthalten, die das Signal

mit der Frequenz $F_1$ und das Signal mit der Frequenz $F_2$ liefern und dass die Stufen zur Erzeugung der pseudo-zufälligen Folgen (150) und (550) einen Generator für die digitalen pseudo-zufälligen Folgen (153) oder (553) enthalten, der durch den Kodierungssichlüssel nach der Bewertung deselben gesteuert wird.

4. System nach Anspruch 3, dadurch gekennzeichnet, dass das Signal mit der Pilotfrequenz $F_p$, das gleichzeitig mit den kodierten Audiosignalen übertragen wird um die Erzeugung der Signale mit den Frequenzen $F_1$ und $F_2$ zu ermöglichen, die gleich Vielfachen von $F_p$ oder gelich einer Subharmonischen von $F_p$ gewählt sind, zur Gewährleistung der Synchronisierung der Generatoren der digitalen pseudo-zufälligen Folgen (153) (553), moduliert ist mit dem Ausgangssignal einer Stufe (160) zum Erzeugen des Synchronsignals, wobei diese Stufe einen Oszillator enthält, dem ein Amplitudenmodulator und eine Formierungsschaltung folgen.

5. System nach Anspruch 3, zum Gebrauch im Bereich des sogenannten verschlüsselten Fernsehens zusammen mit einem Fernsehempfänger, dadurch gekennzeichnet, dass die Erzeugungsstufen der beiden FM-Signale $F_1$ und $F_2$ zwei Phasenverriegelungsschleifen aufweisen, die durch die Teilbildfrequenz $F_T$ zum Liefern des Signals mit der Frequenz $F_1$ und des Signals mit der Frequenz $F_2$ digitalen pseudo-zufälligen Folgen, die bei der Sendung und bei dem Empfang verwendet werden, durch ein Wertigkeitssignal gewährleistet wird, das auf dem Video-Weg ausgestrahlt wird und zur Verschlüsselung dieses Weges benutzt wurde.

6. System nach einem der Ansprüche 4 und 5, dadurch gekennzeichnet, dass in der Dekodieranordnung zum Ausschaltung bzw. Verringern der Schaltstörungen eine Anordnung zur Regelung der Laufzeit der Pilotfrequenz $F_p$ oder der Teilbildfrequenz $F_T$ vorgesehen ist.

7. System nach Anspruch 5, dadurch gekennzeichnet, dass die Dekodieranordnung in dem Fernsehempfänger angeordnet ist.

8. Empfänger für Audio-Signale, gekennzeichnet, die Dekodieranordnung des Übertragungssystems nach einem der Ansprüche 1 bis 4.

9. Fernsehempfänger, gekennzeichnet, durch die Dekodieranordnung der Audio-Signale des Übertragungssystems nach einem der Ansprüche 5 bis 7.

**Claims**

1. An electronic system for the secret transmission of audio signals, comprising a coding arrangement having at least one amplitude modulator, at least one transmission channel and a decoding arrangement comprising an amplitude demodulator, characterized in that:

(A) the coding arrangement comprises:
(a) at the output of an input low-pass filter (105) two parallel modulators (111) and (121) for modulating signals of frequencies $F_1$ and $F_2$ with said audio signals, respectively;

(b) a stage for generating two modulation signals of the frequencies $F_1$ and $F_2$ from a reference signal of the pilot frequency $F_p$;

(c) a first switching device (140) for applying alternately the output signal if one or the other of said modulators to the transmission channel dependent on the state of a signal supplied by a first stage (150) for generating sequences of quasi-random signals;

(B) the decoding arrangement comprises:

(d) a stage for reconstructing signals of the frequencies $F_1$ and $F_2$ from the signal of the frequency $F_p$, the frequency $F_p$ being transmitted through the transmission channel;

(e) a second switching device (520) selecting one or the other of said signals of the frequencies $F_1$ and $F_2$ dependent on the state of a signal supplied by a second stage (550) for generating sequences of quasi-random signals, synchronously with the first stage, said stages being controlled by a coding key transmitted by means of the signal of the frequency $F_p$ for ensuring the synchronism of said stages;

(f) the amplitude demodulator (530) being controlled by the signals of frequencies $F_1$ and $F_2$ and applying the decoded audio signals to an output low-pass filter (536).

2. A system as claimed in Claim 1, characterized in that a pre-emphasis circuit (106) is provided in the coding arrangement between the output of the input low-pass filter (105) and the input of the modulators and that a de-emphasis circuit (535) is arranged in the decoding arrangement between the output of the demodulator (530) and the input of the output low-pass filter (536).

3. A system as claimed in one of the Claims 1 and 2, characterized in that the stages for generating the two modulation signals having the frequencies $F_1$ and $F_2$ comprises an oscillator (131) followed by two phase-locked loops (132) and (133) for producing respectively the signal of the frequency $F_1$ and that of the frequency $F_2$ and that the stages for generating quasi-random signal sequences (150) and (550) comprise a generator for generating digital quasi-random signal sequences (153) or (553) controlled by the coding key after validation of these signals.

4. A system as claimed in Claim 3, characterized in that the signal of the pilot frequency $F_p$ transmitted at the same time as the coded audio signals for permitting the generation of the signals of the frequencies $F_1$ and $F_2$ chosen to be equal to multiples of $F_p$ or a sub-harmonic of $F_p$ is modulated with the aid of a stage (106) for generating the synchronising signal, comprising an oscillator followed by a pulse-shaping circuit, so as to ensure synchronism of the generators for the digital quasi-random signal sequences (153) or (553).

5. A system as claimed in Claim 3, which is suitable for use in the field of the so-called keyed television in association with a television receiver, characterized in that the stages for producing the two modulation signals of the frequencies $F_1$ and $F_2$ comprise two phase-locked loops which are controlled by the scanning frequency $F_T$ for supplying the signal having the frequency $F_1$ and the signal having the frequency $F_2$, respectively, and that the synchronism of the generators for the digital pseudo-random signal sequences used for transmission and for reception is ensured by a validation signal transmitted in the video path and already utilized for keying said path.

6. A system as claimed in one of the Claims 4 and 5, characterized in that an arrangement for controlling the propagation time of the pilot frequency $F_p$ or of the scanning frequency $F_T$ is provided in the decoding arrangement to eliminate or reduce switching noise.

7. A system as claimed in Claim 5, characterized in that the decoding arrangement is included in the television receiver.

8. An audio signal receiver, characterized in that it includes the decoding arrangement of the transmission system as claimed in any one Claims 1 to 4.

9. A television receiver, characterized in that it includes the decoding arrangement for the audio signals of the transmission system as claimed in any of Claims 5 to 7.

FIG1

FIG.2

FIG. 4

FIG.3a

FIG.3b

FIG.5a

FIG.5b

FIG.5c

FIG.5d

FIG.7a

FIG.8a

FIG.7b

FIG.8b

FIG.7c

FIG.9a

FIG.9b

FIG.6